# EUROPEAN PATENT SPECIFICATION

(11) **EP 3 082 440 B1**
(45) Date of publication and mention of the grant of the patent: **25.03.2020**
(21) Application number: 14812531.3
(22) Date of filing: 16.12.2014
(51) Int. Cl.: A23G 1/00, A23G 1/54, A23G 1/48, A23G 1/20, A23G 1/22

(54) **CHOCOLATE PRODUCT HAVING VISIBLE EDIBLE NON-CHOCOLATE INCLUSIONS**
SCHOKOLADENPRODUKT MIT SICHTBAREN ESSBAREN NICHT-SCHOKOLADE-EINSCHLÜSSEN
PRODUIT EN CHOCOLAT COMPORTANT DES INCLUSIONS VISIBLES COMESTIBLES NON CHOCOLATÉES

(30) Priority: 20.12.2013 EP 13199029
(43) Date of publication of application: 26.10.2016
(73) Proprietor: Société des Produits Nestlé S.A., 1800 Vevey (CH)
(72) Inventor: GROLIMUND, Daniel, CH-3065 Bolligen (CH); CLEMENT, Patrick, CH-1661 Le Paquier (CH); SAVARY, François, 1618 Châtel-St-Denis (CH)
(74) Representative: Lumsden, Stuart Edward Henry
(86) International application number: PCT/EP2014/077984
(87) International publication number: WO 2015/091500

(56) References cited:
- DE-U1- 8 707 301
- GB-A- 191 218 424
- GB-A- 191 218 438
- US-A1- 2013 251 856
- DATABASE GNPD [Online] MINTEL; December 2001 (2001-12), anonymus: "Dark chocolate bar with nuts", XP002727162, Database accession no. 124939
- J Chevalley ET AL: "REVIEW PAPER RHEOLOGY OF CHOCOLATE", , 5 November 1974 (1974-11-05), XP055129452, Retrieved from the Internet: URL:http://onlinelibrary.wiley.com/store/1 0.1111/j.1745-4603.1975.tb01247.x/asset/j. 1745-4603.1975.tb01247.x.pdf?v=1&t=hxoshl3 q&s=a75330e8b68313313791ddcdcff80cd2af2836 70 [retrieved on 2014-07-16]

## Description

### 1. Field of the invention

The present invention relates to a mold for manufacturing a chocolate product, in particular chocolate tablets or chocolate bars, having visible edible non-chocolate inclusions at an external surface, as well as to a method for manufacturing such a chocolate product and further to a chocolate product obtained e.g. by such a method.

### 2. Technical background

From the prior art, molds and methods for manufacturing chocolate products (*e.g*. chocolate tablets or chocolate bars) are well-known. For manufacturing a chocolate product, usually a mold (*e.g*. a rigid or an elastic plastic mold) is filled with heated chocolate which can be removed from the mold after the chocolate cooled down (*i.e*. after the chocolate solidified), thereby obtaining a respective chocolate product. Molds and methods for manufacturing a chocolate product are, for example, disclosed in documents EP 0 429 853 A2 and EP 0 630 574 A1.

Moreover, from the prior art, it is also known to add fruits or fruit pieces (*e.g*. nuts or raisins) to the chocolate. Usually, such ingredients are added to the heated chocolate, before the heated chocolate is casted into the mold. Thereby, an essentially uniform distribution of the fruits or fruit pieces within the chocolate product is provided.

However, by means of the known methods for manufacturing chocolate products, no chocolate product can be provided having predetermined visible fruit inclusions.

A dark chocolate tablet with peanut inclusions was available commercially in 2001 in Germany from Alfred Ritter under the trade designation Ritter Sport, (see Minitel record 124939, Dec 2001). The tablet was packaged in an opaque plastic wrapper. The Mintel record shows, an image on the outside of the pack of peanuts dispersed at surface of the chocolate, evenly dispersed with large gaps between them. The tablet is flat in appearance and there is no indication how the product was made.

DE8707301U (Sedil) describes a chocolate product with improved mechanical stability during transport and storage within which fruit inclusions are dispersed to anchor a chocolate coating to a 15 cm diameter circular chocolate base. Some of the fruit inclusions are visible at the surface of the coating.

GB18424 (Savy1) describes a machine for automatically producing molded chocolate having hard bodies such almonds dispersed therein. These inclusions are not intended to visible at the chocolate surface as they are stated as coated or covered with a layer or chocolate. Savy1 states (page 2 lines 27 to 30) that nuts can be used that are larger than the size of the mould so that they protrude from the back of a substantially flat thin bar. This teaches away from preparing bars where the inclusions are visible from the top of a moulded bar or adding inclusions in a manner so they conform to the shape of the tablet and do not protrude therefrom.

GB 18438 (Savy2) describes a very similar moulding machine to that of GB18424 (Savy1) which is used in a process to add hard almonds to molds at high speed. A spring loaded plate is used to press almonds into the bottom of the molds and prevent them from transferring between molds. The process and machine of Savy 2 would not be suitable for adding fragile inclusions such as soft fruits.

US2013-251856 (McKibben) describes a chocolate confectionery having multiple deposits of filling distributed evenly throughout a base of chocolate wafer. This document addresses a different problem to that of adding discrete solid inclusions to chocolate.

Review of Chocolate Rheology (Chevalley, 5 Nov 1974) is a review paper describing the rheology of melted chocolate and is only of background relevance.

Visible fruit inclusions means that the fruits or fruit pieces are visible at an external surface of the chocolate product, i.e. that at least a portion of the fruits or fruit pieces facing to an external surface of the chocolate product is not covered with chocolate material, but is visible for a consumer.

Therefore, it is an object of the present invention to provide a mold for manufacturing a chocolate product, in particular chocolate tablets or chocolate bars, having such visible fruit inclusions. In addition, it is also an object of the present invention to provide a method for manufacturing such a chocolate product and further to provide such a chocolate product.

These and other objects, which become apparent upon reading the following description, are solved by the subject-matter of the independent claims. The dependent claims refer to preferred embodiments of the invention.

### 3. Summary of the invention

According to the invention, a mold for manufacturing a chocolate product, in particular chocolate tablets or chocolate bars, having visible edible non-chocolate inclusions, which are preferably particles, is provided, wherein the mold comprises at least one cavity element in which the inclusions and heated chocolate can be filled, wherein the cavity element comprises a curved bottom section and (preferably two) adjacent side wall sections extending from the bottom section to an upper side of the mold. According to the invention, the cavity element has the following dimensions:
- a maximum depth between 10 and 80 mm (preferably between 10 and 70 mm or 15 and 70 mm, more preferably between 10 and 50 mm or 20 and 50 mm);
- a maximum width between 8 and 100 mm (preferably between 15 and 80 mm, more preferably between 20 and 50 mm or 25 and 50 mm), wherein the ratio of the maximum depth to the maximum width is between 0.3 and 1.2 (preferably between 0.5 and 1.0, more preferably between 0.6 and 0.8);
- the curved bottom section has a radius between 4 and 50 mm (preferably between 5 and 40 mm or 10 and 40 mm, more preferably between 5 and 30 mm or 20 and 30 mm);
- the side wall sections extends from the upper side of the mold to a depth between 4 and 70 mm (preferably between 5 and 60 mm or 15 and 60 mm, more preferably between 5 and 40 mm or 25 and 40 mm).

As mentioned above, the term "visible inclusions", e.g. fruits, nuts, dried fruit etc., means that the preferably particulate inclusions are visible at an external surface of the chocolate product, *i.e*. that at least a portion of the fruits or fruit pieces facing to an external surface of the chocolate product is not covered with chocolate material, but is visible for a consumer. The inclusions are visible on the profiled side of the chocolate product which is opposed to the flat bottom side.

Within the context of the present invention, the term "profiled side" of the chocolate product indicates the side, aspect or surface which is opposed to the flat bottom side and which is shaped by moulding in the moulds according to the present invention. For the sake of clarity, the profiled side of the chocolate corresponds to that side, aspect or surface of the product which, during the moulding process, is in contact with the mould surface.

Notably, the respective depth is measured from the upper side of the mold (*e.g*. from the scraping surface). The term upper side of the mold has to be understood as the usually horizontal upper surface of the mold, which is not covered with heated chocolate, but usually provides a scrapper surface/edge (*i.e.* a scrapper blade can be arranged at the upper side of the mold and the chocolate protruding the cavity element can be scrapped off).

The term cavity element has to be understood as any suitable form having the above mentioned dimensions which can be filled with heated chocolate and fruits or fruit pieces comprising a curved bottom section (*i.e.* a section which is at least partially cylindrical or spherical shaped) and two adjacent sidewall sections arranged above the curved bottom section. Preferably, the cavity element comprises two further side wall sections (*e.g*. a front and a rear side wall section) extending from the upper side of the mold to the maximum depth of the cavity element.

Many experiments have been carried out in order to establish that the above-mentioned dimensions of a cavity element allow manufacturing a chocolate product having visible fruit inclusions, wherein a heated chocolate was used having a viscosity between 1000 and 15000 mPas. As a result, the heated chocolate did not flow in all spaces between the mold (*i.e*. the curved bottom section) and the fruits or fruit pieces arranged thereon such that the visible fruit inclusions of the chocolate product remained.

A skilled person understands that in particular the radius of the curved bottom section could be adapted to the specific fruits or fruit pieces (*i.e.* in particular to the average sizes of the fruits or fruit pieces) used for manufacturing a respective chocolate product, thereby adjusting the space/angles between the curved bottom section and the fruits or fruit pieces. However, a respective adjustment of the impression of a chocolate product (*i.e*. the impression of the visible fruit inclusions) can also be made by varying the other above-mentioned dimensions and in particular by varying the viscosity of the heated chocolate and of the specific sizes of the fruits or fruit pieces.

It is preferred that the sidewall sections (*e.g*. the wall sections extending from the upper side of the mold to the curved bottom section and the rear and front wall sections extending from the upper side of the mold to the maximum depth of the cavity element) are inclined by at least 5° DEG (preferably by at least 10° DEG, more preferably by at least 20° DEG) with respect to a vertical line. Thereby, removing of the solidified chocolate from the mold can be facilitated.

It is further preferred that the curved bottom section is at least partially cylindrical or spherical shaped. Preferably, the length of the cavity element is at least 10 mm (preferably at least 15 mm, more preferably at least 20 mm). It is further preferred that the cavity element has in top view an essentially rectangular and elongated shape. Thereby, elongated chocolate bars can be provided..

Preferably, the mold comprises at least two adjacent cavity elements, wherein at least two adjacent sidewall sections of the two adjacent cavity elements converge at a depth between 4 and 70 mm (preferably between 10 and 50 mm, more preferably between 20 and 30 mm) in such a way that a curved middle section between two adjacent cavity elements is formed. In other words, it is possible to arrange two adjacent cavity elements such that two adjacent sidewall sections of the adjacent cavity elements do not extend to the upper side of the mold, but intersect at a depth between 4 and 70 mm, thereby providing a predetermined breaking line for a later molded chocolate product. Preferably, the curved middle section provided by the converging two adjacent side wall sections has a radius between 0.5 and 5 mm (preferably between 1 and 4 mm, more preferably between 2 and 3 mm).

It is further preferred that the mold comprises at least one curved notch section for providing a (further) predetermined breaking line for a molded chocolate product. Such a notch section can be, for example, provided transversal of an elongated cavity element. The curved notch section is preferable provided at a depth between the depth of the side wall sections and the maximum depth of the cavity element. It is particularly preferred that the curved notch section ends in an interval between at least 1 mm above the maximum depth of the cavity element and at least 1 mm under the depth of the curved middle section.

In one embodiment of the present invention, the mold comprises several adjacent cavity elements which may be aligned along the axis of their length or width. In a further embodiment, the mold comprises several adjacent lines of aligned cavity elements.

In a preferred embodiment, a mould is provided for a bar or a tablet comprising several adjacent cavity elements.

Finally, it is preferred that the mold is made from an elastic or rigid plastic material, wherein it is preferred that the mold is provided as an integral part.

The present invention further relates to a method for manufacturing a chocolate product, in particular, chocolate tablets or chocolate bars having visible food inclusions comprising at least the flowing steps:
- providing a mold as described above;
- providing fruits or fruit pieces, wherein the fruits or fruit piece have an average size between 1 and 50 mm (preferable between 2 and 40 mm, and even more preferable between 5 and 25 mm);
- providing heated chocolate having a viscosity between 1000 and 15000 mPas (preferably between 5000 and 10000 mPas);
- distributing the fruits or fruit pieces on the mold such that the fruits or fruit pieces rest at least partially in the curved bottom section of the at least one cavity element of the mold;
- depositing the heated chocolate in the mold such that the arranged fruits or fruit pieces essentially keep in place;
- cooling the heated chocolate until the chocolate solidifies;
- removing the solidified chocolate from the mold.

Notably, the heated chocolate can be milk, dark and/or white chocolate, as long as the viscosity is between the above mentioned range.

It is further preferred that after depositing the heated chocolate, the mold is vibrated, thereby providing a homogenous distribution of the heated chocolate in the mold. However, in this respect it has to be noted that the vibration is performed in such a way that the fruits or fruit pieces keep in place and are not shaken too much since then the heated chocolate may flow in the entire spaces between the fruits or fruit pieces and the curved bottom section, thereby covering the fruits or fruit pieces completely.

Preferably, the fruits or fruit pieces distributed in the mold are hard fruits (*e.g*. Hazelnuts, Almonds, Brazil Nuts, Cashew nuts, etc.) or soft fruits (*e.g*. Raisins, Cranberries, Blue Berries, Blackcurrant, apples, pear, orange, apricot, etc.) or crispy inclusions (e.g. caramel, coffee, biscuits, etc.) or mixtures thereof. Preferably, the soft fruit is dried fruit.

The present invention further relates to a chocolate product, in particular chocolate tablets or chocolate bars, having visible fruit inclusions provided by a method described-above and using a mold described-above.

Preferably, the chocolate product comprises between 25 and 70%, more preferable between 30 and 60%, and even more preferably between 40 and 50%, visible fruit inclusions with respect to the external surface of the chocolate product, preferably with respect to the upper surface of the chocolate product.

### 4. Description of the preferred embodiments

In the following, the invention is described exemplarily with reference to the enclosed figures, in which
- **Figure 1**: is a schematic underside view showing a mold according to a first embodiment of the invention;
- **Figure 2**: is a schematic side view of the first embodiment of the invention;
- **Figure 3**: is a schematic side view of the first embodiment of the invention;
- **Figure 4**: is a schematic underside view showing a mold according to a second embodiment of the invention;
- **Figure 5**: is a schematic side view of the second embodiment of the invention;
- **Figure 6**: is a schematic side view of the second embodiment of the invention;
- **Figure 7**: is a schematic underside view showing a mold according to a third embodiment of the invention;
- **Figure 8**: is a schematic side view of the third embodiment of the invention;
- **Figure 9**: is a schematic side view of the third embodiment of the invention;
- **Figure 10**: is a schematic top view of a chocolate product according to the invention.

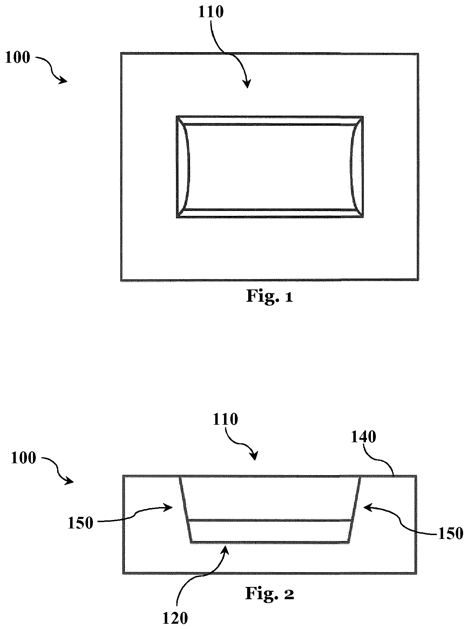

Figures 1 to 3 are schematic views of a mold 100, according to a first embodiment of the invention, for manufacturing a chocolate product, in particular chocolate tablets or chocolate bars, having visible fruit inclusions.

As can be taken from figure 1, the mold 100 is in top view essentially rectangular-shaped comprising a cavity element 110 into which fruits and chocolate can be filled.

The cavity element 110 comprises a curved bottom section 120. At the elongated side of the cavity element 110, two side wall sections 130 are arranged extending from the curved bottom section 120 to an upper side 140 of the mold 100. At the short sides of the cavity element 110 two further side wall sections (i.e. a rear and a front side wall section) 150 are arranged extending from the maximum depth of the cavity element 110 to the upper side 140 of the mold 100.

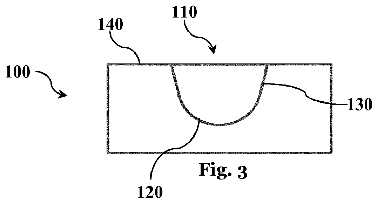

In the shown preferred embodiment, the curved bottom section 120 is a cylinder cutout. Alternatively, the curved bottom sections 120 can be provided at least partial spherical. As can be seen in particular in figure 3, in the shown preferred embodiment, the side wall sections 130 are arranged tangentially with respect to the curved bottom section 120 extending to the upper side 140 of the mold 110.

In the preferred embodiment, the cavity element 110 has a maximum depth of 14 mm and a maximum width of 22.5 mm, wherein the ratio of the depth to the width is 0.622 (14 mm : 22.5 mm). The length of this embodiment is about 38.25 mm. In the shown preferred embodiment, the radius of the curved bottom section 120 is about 11 mm. The side wall sections 130 extend from the upper side 140 of the mold 100 to a depth of about 6.5 mm, wherein the rear and front side wall sections 150 extend from the upper side 140 of the mold 100 to a depth of 14 mm (*i.e*. to the maximum depth of the cavity element 110). As can be further taken from figures 2 and 3, the (four) sidewall sections 130, 150 are inclined by about 20° DEG with respect to the vertical.

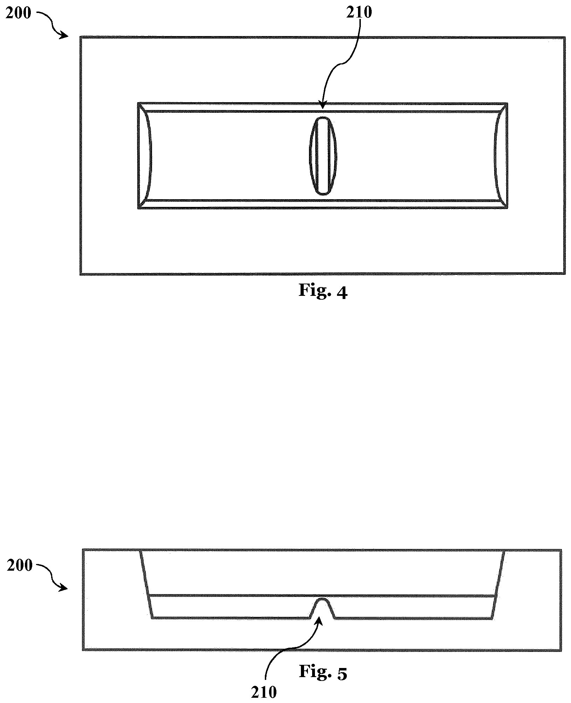

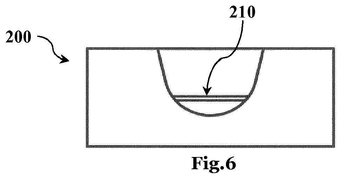

Figures 4 to 6 are schematic views of a mold 200, according to a second embodiment of the invention, for manufacturing a chocolate product, in particular chocolate tablets or chocolate bars, having visible fruit inclusions.

In contrast to the mold 100 shown in figures 1 to 3, the mold 200 shown in figure 4 to 6 comprises a curved notch section 210 providing a predetermined breaking line for a molded chocolate product, wherein the shown curved notch section 210 extends from the maximum depth of the cavity element (*i.e*. in the preferred embodiment having a depth of about 14 mm) to a depth of about 8 mm. Notably, such curved notch sections 210 can be provided at every suitable position (*i.e*. at every position a predetermined breaking line for a product should be provided).

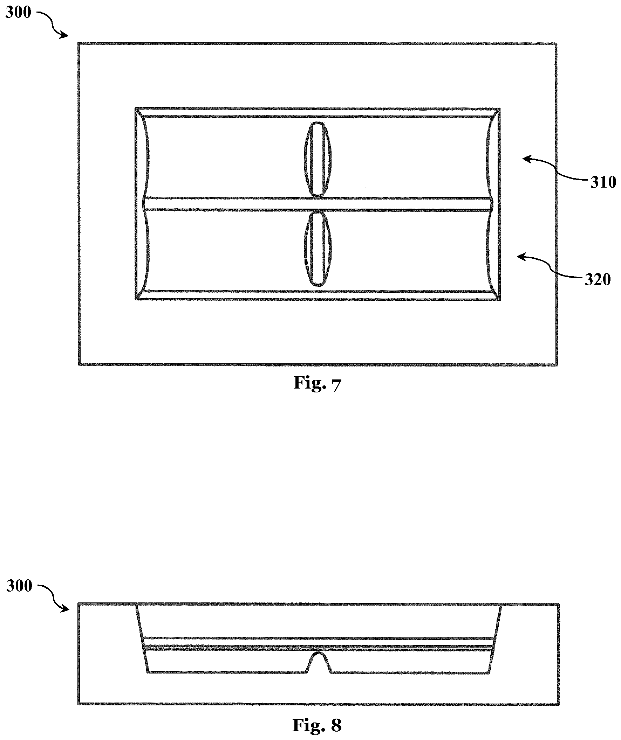

Figures 7 to 9 are schematic views of a mold 300, according to a third embodiment of the invention, for manufacturing a chocolate product, in particular chocolate tablets or chocolate bars, having visible fruit inclusions.

In contrast to the embodiments shown in figures 1 to 6, the mold 300 comprises two adjacent cavity elements 310, 320 each having a respective curved bottom section 330, 340.

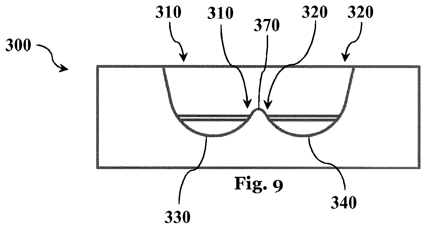

As can be taken from figure 9, two adjacent sidewall sections 350, 360 of the two adjacent cavity elements 310, 320 converge to a curved middle-section 370 at a depth of about 5.5 mm, wherein the curved middle-section 370 has a radius of about 1.25 mm.

Thereby, in case a chocolate tablet or a chocolate bar having two adjacent cavity elements 310, 320 a further predetermined breaking line for a molded chocolate product can be provided.

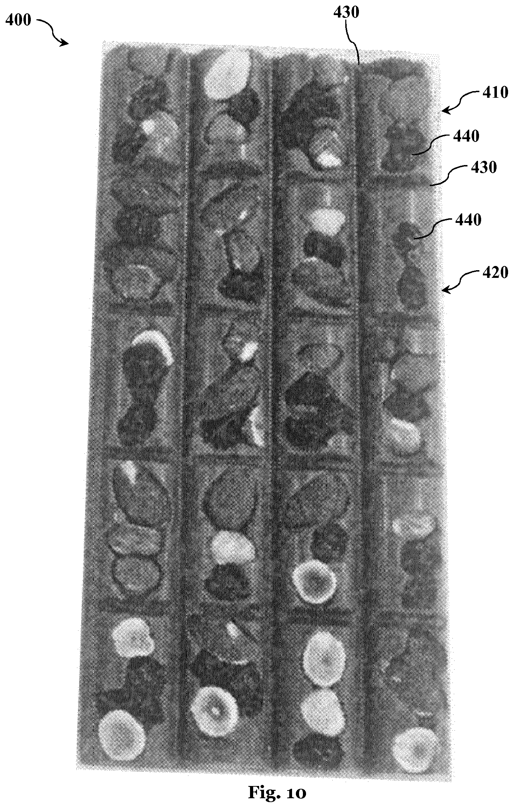

Figure 10 shows a chocolate tablet 400 provided by a method according to the present invention using a corresponding mold (*i.e*. a mold having several adjacent cavity elements and several curved notch sections providing respective predetermined breaking lines).

The chocolate tablet 400 comprises several chocolate sections 410, 420 between respective breaking lines 430 are provided. As can be seen in figure 10, the chocolate tablet 400 comprises visible fruit inclusions 440 (*e.g*. visible nuts and raisins) which are not covered by chocolate, wherein the chocolate tablet 400 comprises about 60% visible fruit inclusions with respect to the upper surface of the chocolate tablet.

For manufacturing the chocolate tablet 400 shown in figure 10 at least the following steps have to be performed:
At the beginning a mold, fruits or fruit pieces (*e.g*. hard fruits or soft fruits or a mixture thereof), and heated chocolate having a viscosity between 1000 and 15000 mPas have to be provided.

In a subsequent step, the fruits or fruit pieces are distributed on the surface of the mold such that the fruits rest at least partially in the curved bottom sections of the cavity elements of the mold, wherein an essentially equal distribution of the fruits or fruit pieces is preferred.

Subsequently, the heated chocolate is equally deposited in the mold such that the arranged fruits are completely covered by the chocolate. However, the heated chocolate should be applied such that the fruits or fruit pieces essentially keep in place.

As next step, it is preferred to gently vibrate the mold filled with fruits and chocolate in order to provide a homogeneous distribution of the heated chocolate in the mold. Optionally, the exceeding chocolate can be scrapped off, for example, by means of a scraping blade slided over the upper surface of the mold.

Subsequently, the filled mold is cooled down until the chocolate solidifies. Finally, the solidified chocolate can be removed from the mold by a common demoulding step (*e.g.* by means of vibration applied to the mold).

It should be clear to a skilled person that the embodiments shown in the figures above are preferred embodiments, but that, however, also different molds having different dimensions can be used, as long as the dimensions of the cavity element are within the subsequently claimed dimensions, which have been established by various experiments and with which a chocolate product having visible fruit inclusions can be provided.

## Claims

1. Mold (100, 200, 300) for manufacturing a chocolate product (400), having visible particulate inclusions (440) made from a non-chocolate edible material, wherein the mold (100, 200, 300) comprises at least one cavity element (110, 310, 320) in which inclusions and chocolate can be filled, wherein the cavity element (110, 310, 320) comprises a curved bottom section (120, 330, 340) and at least one adjacent side wall section (130, 350, 360) extending from the curved bottom section (120, 330, 340) to an upper side (140) of the mold (100, 200, 300), wherein the cavity element (110, 310, 320) has the following dimensions:
a maximum depth between 10 and 80 mm;
a maximum width between 8 and 100 mm, wherein the ratio of the maximum depth to the maximum width is between 0.3 and 1.2;
the curved bottom section (120, 330, 340) has a radius between 4 and 50 mm;
the at least one side wall section (130, 350, 360) extends from the upper side (140) of the mold (100, 200, 300) to a depth between 4 and 70 mm.

2. Mold (100, 200, 300) according to claim 1, for manufacturing chocolate tablets or chocolate bars.

3. Mold (100, 200, 300) according to either claim 1 or 2, wherein the curved bottom section (120, 330, 340) is at least partially cylindrical or spherical shaped.

4. Mold (100, 200, 300) according to one of the claims 1 to 3, wherein the side wall sections (130, 150, 350, 360) are inclined by at least 5° DEG with respect a vertical line.

5. Mold (100, 200, 300) according to any of the preceding claims, wherein the length of the cavity element (110, 310, 320) is at least 10 mm.

6. Mold (100, 200, 300) according to any of the preceding claims, wherein the mold (300) comprises at least two adjacent cavity elements (310, 320), wherein at least two adjacent side wall sections (350, 360) of the two adjacent cavity elements (310, 320) converge at a depth between 4 and 70 mm forming a curved middle section (370).

7. Mold (100, 200, 300) according to claim 6, wherein the curved middle section (370) has a radius between 0.5 and 5 mm.

8. Mold (100, 200, 300) according to any of the preceding claims, wherein the mold (100, 200, 300) comprises at least one curved notch section (210) for providing a predetermined breaking line (430) for a molded chocolate product (400).

9. Mold (100, 200, 300) according to claim 8, wherein the curved notch section (210) is provided at a depth between the depth of the side wall sections (120, 350, 360) and the maximum depth of the cavity element (310, 320), wherein preferably the curved notch section (210) ends in an interval between at least 1 mm above the maximum depth of the cavity element (310, 320) and/or at least 1 mm under the curved middle section (370) of two adjacent cavity elements (310, 320).

10. Mold (100, 200, 300) according to any of the preceding claims, wherein the mold (100, 200, 300) is made from an elastic or rigid plastic material.

11. Method for manufacturing a chocolate product (400), having visible particulate inclusions (440) made from an edible non-chocolate material, comprising at least the following steps:
providing a mold (100, 200, 300) according to any of claims 1 to 10;
providing inclusions;
providing heated chocolate having a viscosity between 1000 and 15000 mPas,
distributing the inclusions on the mold (100, 200, 300) such that the inclusions rest at least partially in the curved bottom section of the at least one cavity element (110, 310, 320) of the mold (100, 200, 300);
depositing the heated chocolate in the mold (100, 200, 300) such that the arranged inclusions essentially keep in place;
cooling the heated chocolate until the chocolate solidifies;
removing the solidified chocolate from the mold (100, 200, 300).

12. Method for manufacturing as claimed in claim 11 where the chocolate product (400) is a chocolate tablet or chocolate bar.

13. Method as claimed in claim 11 or 12, where the heated chocolate has a viscosity between 2500 and 12000 mPas.

14. Method as claimed in claim 13, where the heated chocolate has a viscosity between 5000 and 10000 mPas.

15. Method according to any one of claims 11 to 14, wherein after depositing the heated chocolate, a vibration step is provided facilitating a homogenous distribution of the heated chocolate in the mold (100, 200, 300).

16. Method as claimed in any of claims 11 to 15, where the inclusions are fruits or fruit pieces or crispy inclusions or mixtures thereof.

17. Method according to claims 11 to 16, wherein the fruits or pieces thereof have an average size between 1 and 50 mm,

18. Method according to claim 17, wherein the fruits or pieces thereof have an average size between 2 and 40 mm.

19. Method according to claim 18, wherein the fruits or pieces thereof and have an average size between 5 and 25 mm.

20. Method according to any of claims 16 to 19, wherein the inclusions distributed in the mold (100, 200, 300) are hard fruits, soft fruits or mixtures thereof.

21. Method according to claim 20, wherein the hard fruit inclusions (100, 200, 300) are hazelnuts, almonds, brazil nuts, cashew nuts; and the soft fruit inclusions (100, 200, 300) are raisins, cranberries, blueberries.

22. Chocolate product (400), having visible edible inclusions (440) obtained by a method according to any of claims 11 to 21 where the visible inclusions are fruit and comprise between 25 and 70% with respect to an external upper surface of the chocolate product (400) opposing a flat bottom side.

23. Chocolate product (400) as claimed in claim 22, which is a chocolate tablet or chocolate bar.

24. Chocolate product (400) according to any of claims 22 to 23, which comprises between 30 and 60% visible fruit inclusions (440) with respect to the external upper surface.

25. Chocolate product (400) according to claim 24, which comprise between 40 and 50% visible fruit inclusions (440) with respect to the external upper surface.

26. Chocolate product (400) obtained by a method according to any of claims 11 to 21 having a flat bottom side and a profiled side opposed to the flat bottom side, wherein on the profiled side inclusions are embedded in chocolate material such that they are visible and the outer side of the inclusions follows the profiled contour of the profiled side, the inclusions being pieces of edible non-chocolate material, wherein the chocolate product has a height h measured from the flat bottom to the highest peak of the profiled side, wherein the inclusions are only incorporated in a distance of less than 0.5 h but more than 0.05 h, wherein the inclusions represent at least 25% of the surface of the profiled side.

27. Chocolate product (400) as claimed in claim 26 wherein the inclusions are fruits or fruit pieces or crispy inclusions or mixtures thereof.

28. Chocolate product (400) as claimed in claim 26 or 27 wherein the inclusions are only incorporated in a distance of less than 0.3 h but more than 0.1 h.

29. Chocolate product as claimed in any of claims 26 to 28, wherein the inclusions represent less than 95% of the surface of the profiled side, the rest being chocolate material.

30. Chocolate product as claimed in any of claims 26 to 29, wherein the inclusions represent at least 30% of the surface of the profiled side.

31. Chocolate product as claimed in any of claims 26 to 30, wherein the inclusions represent at least 40% of the surface of the profiled side.

## Patentansprüche

1. Form (100, 200, 300) zur Herstellung eines Schokoladenproduktes (400) mit sichtbaren Partikeleinschlüssen (440), die aus einem essbaren Nicht-Schokolade-Material hergestellt sind, wobei die Form (100, 200, 300) mindestens ein Hohlraumelement (110, 310, 320) umfasst, in das Einschlüsse und Schokolade gefüllt werden können, wobei das Hohlraumelement (110, 310, 320) einen gebogenen unteren Abschnitt (120, 330, 340) und mindestens einen angrenzenden Seitenwandabschnitt (130, 350, 360) umfasst, der sich von dem gebogenen unteren Abschnitt (120, 330, 340) zu einer oberen Seite (140) der Form (100, 200, 300) erstreckt, wobei das Hohlraumelement (110, 310, 320) die folgenden Abmessungen aufweist:
eine maximale Tiefe zwischen 10 und 80 mm;
eine maximale Breite zwischen 8 und 100 mm, wobei das Verhältnis der maximalen Tiefe zur maximalen Breite zwischen 0,3 und 1,2 liegt;
der gebogene untere Abschnitt (120, 330, 340) einen Radius zwischen 4 und 50 mm aufweist;
sich der mindestens eine Seitenwandabschnitt (130, 350, 360) von der oberen Seite (140) der Form (100, 200, 300) bis zu einer Tiefe zwischen 4 und 70 mm erstreckt.

2. Form (100, 200, 300) nach Anspruch 1 zur Herstellung von Schokoladentabletten oder Schokoladenriegeln.

3. Form (100, 200, 300) nach Anspruch 1 oder 2, wobei der gebogene untere Abschnitt (120, 330, 340) zumindest teilweise zylindrisch oder kugelförmig ist.

4. Form (100, 200, 300) nach einem der Ansprüche 1 bis 3, wobei die Seitenwandabschnitte (130, 150, 350, 360) um mindestens 5 Grad in Bezug auf eine vertikale Linie geneigt sind.

5. Form (100, 200, 300) nach einem der vorhergehenden Ansprüche, wobei die Länge des Hohlraumelements (110, 310, 320) mindestens 10 mm beträgt.

6. Form (100, 200, 300) nach einem der vorhergehenden Ansprüche, wobei die Form (300) mindestens zwei angrenzende Hohlraumelemente (310, 320) umfasst, wobei mindestens zwei angrenzende Seitenwandabschnitte (350, 360) der zwei angrenzenden Hohlraumelemente (310, 320) in einer Tiefe zwischen 4 und 70 mm unter Ausbildung eines gebogenen mittleren Abschnitts (370) konvergieren.

7. Form (100, 200, 300) nach Anspruch 6, wobei der gebogene mittlere Abschnitt (370) einen Radius zwischen 0,5 und 5 mm aufweist.

8. Form (100, 200, 300) nach einem der vorhergehenden Ansprüche, wobei die Form (100, 200, 300) mindestens einen gebogenen Kerbabschnitt (210) zum Bereitstellen einer Sollbruchlinie (430) für ein geformtes Schokoladenprodukt (400) aufweist.

9. Form (100, 200, 300) nach Anspruch 8, wobei der gebogene Kerbabschnitt (210) in einer Tiefe zwischen der Tiefe der Seitenwandabschnitte (120, 350, 360) und der maximalen Tiefe des Hohlraumelements (310, 320) vorgesehen ist, wobei der gebogene Kerbabschnitt (210) vorzugsweise in einem Intervall zwischen mindestens 1 mm oberhalb der maximalen Tiefe des Hohlraumelements (310, 320) und/oder mindestens 1 mm unter dem gebogenen mittleren Abschnitt (370) der zwei angrenzenden Hohlraumelemente (310, 320) endet.

10. Form (100, 200, 300) nach einem der vorhergehenden Ansprüche, wobei die Form (100, 200, 300) aus einem elastischen oder starren Kunststoffmaterial hergestellt ist.

11. Verfahren zur Herstellung eines Schokoladenprodukts (400) mit sichtbaren Partikeleinschlüssen (440), die aus einem essbaren Nicht-Schokolade-Material hergestellt sind, mindestens die folgenden Schritte umfassend:
Bereitstellen einer Form (100, 200, 300) nach einem der Ansprüche 1 bis 10;
Bereitstellen von Einschlüssen;
Bereitstellen erwärmter Schokolade mit einer Viskosität zwischen 1000 und 15000 mPas, Verteilen der Einschlüsse auf der Form (100, 200, 300) derart, dass die Einschlüsse zumindest teilweise in dem gebogenen unteren Abschnitt des mindestens einen Hohlraumelements (110, 310, 320) der Form (100, 200, 300) liegen;
Absetzen der erwärmten Schokolade in die Form (100, 200, 300) derart, dass die angeordneten Einschlüsse im Wesentlichen an ihren Orten bleiben;
Abkühlen der erwärmten Schokolade, bis die Schokolade erstarrt;
Entfernen der erstarrten Schokolade aus der Form (100, 200, 300).

12. Verfahren zur Herstellung nach Anspruch 11, wobei das Schokoladenprodukt (400) eine Schokoladentablette oder ein Schokoladenriegel ist.

13. Verfahren nach Anspruch 11 oder 12, wobei die erwärmte Schokolade eine Viskosität zwischen 2500 und 12000 mPas aufweist.

14. Verfahren nach Anspruch 13, wobei die erwärmte Schokolade eine Viskosität zwischen 5000 und 10000 mPas aufweist.

15. Verfahren nach einem der Ansprüche 11 bis 14, wobei nach dem Einbringen der erwärmten Schokolade ein Vibrationsschritt vorgesehen ist, der eine homogene Verteilung der erwärmten Schokolade in der Form (100, 200, 300) ermöglicht.

16. Verfahren nach einem der Ansprüche 11 bis 15, wobei die Einschlüsse Früchte oder Fruchtstücke oder knusprige Einschlüsse oder Gemische davon sind.

17. Verfahren nach einem der Ansprüche 11 bis 16, wobei die Früchte oder Stücke davon eine durchschnittliche Größe zwischen 1 und 50 mm aufweisen.

18. Verfahren nach Anspruch 17, wobei die Früchte oder Stücke davon eine durchschnittliche Größe zwischen 2 und 40 mm aufweisen.

19. Verfahren nach Anspruch 18, wobei die Früchte oder Stücke davon eine durchschnittliche Größe zwischen 5 und 25 mm aufweisen.

20. Verfahren nach einem der Ansprüche 16 bis 19, wobei die in der Form (100, 200, 300) verteilten Einschlüsse harte Früchte, weiche Früchte oder Gemische davon sind.

21. Verfahren nach Anspruch 20, wobei die Einschlüsse aus harten Früchten (100, 200, 300) Haselnüsse, Mandeln, Paranüsse, Cashew-Nüsse sind; und die Einschlüsse aus weichen Früchten (100, 200, 300) Rosinen, Cranberries, Heidelbeeren sind.

22. Schokoladenprodukt (400) mit sichtbaren essbaren Einschlüssen (440), das durch ein Verfahren nach einem der Ansprüche 11 bis 21 gewonnen wird, wobei die sichtbaren Einschlüsse Früchte sind und zwischen 25 und 70 % bezüglich einer äußeren Oberseite des Schokoladenprodukts (400) gegenüber einer flachen Unterseite umfassen.

23. Schokoladenprodukt (400) nach Anspruch 22, welches eine Schokoladentablette oder ein Schokoladenriegel ist.

24. Schokoladenprodukt (400) nach einem der Ansprüche 22 bis 23, das zwischen 30 und 60 % an sichtbaren Fruchteinschlüssen (440) bezüglich der äußeren Oberseite umfasst.

25. Schokoladenprodukt (400) nach Anspruch 24, das zwischen 40 und 50 % an sichtbaren Fruchteinschlüssen (440) bezüglich der äußeren Oberseite umfasst.

26. Schokoladenprodukt (400), das durch ein Verfahren nach einem der Ansprüche 11 bis 21 gewonnen wird und eine flache Unterseite und eine profilierte Seite gegenüber der flachen Unterseite aufweist, wobei auf der profilierten Seite derart Einschlüsse in das Schokoladenmaterial eingebettet sind, dass diese sichtbar sind und die Außenseite der Einschlüsse der profilierten Kontur der profilierten Seite folgt, wobei die Einschlüsse Stücke von essbarem Nicht-Schokolade-Material sind, wobei das Schokoladenprodukt eine Höhe h, gemessen von der flachen Unterseite zur höchsten Spitze der profilierten Seite, aufweist, wobei die Einschlüsse nur in einem Abstand von weniger als 0,5 h, aber mehr als 0,05 h eingebracht sind, wobei die Einschlüsse mindestens 25 % der Oberfläche der profilierten Seite ausmachen.

27. Schokoladenprodukt (400) nach Anspruch 26, wobei die Einschlüsse Früchte oder Fruchtstücke oder knusprige Einschlüsse oder Gemische davon sind.

28. Schokoladenprodukt (400) nach Anspruch 26 oder 27, wobei die Einschlüsse nur in einem Abstand von weniger als 0,3 h, aber mehr als 0,1 h eingebracht sind.

29. Schokoladenprodukt nach einem der Ansprüche 26 bis 28, wobei die Einschlüsse weniger als 95 % der Oberfläche der profilierten Seite ausmachen, wobei der Rest Schokoladenmaterial ist.

30. Schokoladenprodukt nach einem der Ansprüche 26 bis 29, wobei die Einschlüsse mindestens 30 % der Oberfläche der profilierten Seite ausmachen.

31. Schokoladenprodukt nach einem der Ansprüche 26 bis 30, wobei die Einschlüsse mindestens 40 % der Oberfläche der profilierten Seite ausmachen.

## Revendications

1. Moule (100, 200, 300) pour la fabrication d'un produit de chocolat (400), ayant des inclusions particulaires visibles (440) constituées d'un matériau comestible non-chocolat, dans lequel le moule (100, 200, 300) comprend au moins un élément de cavité (110, 310, 320) dans lequel des inclusions et du chocolat peuvent être remplis, dans lequel l'élément de cavité (110, 310, 320) comprend une section inférieure incurvée (120, 330, 340) et au moins une section de paroi latérale adjacente (130, 350, 360) s'étendant de la section inférieure incurvée (120, 330, 340) à un côté supérieur (140) du moule (100, 200, 300), dans lequel l'élément de cavité (110, 310, 320) a les dimensions suivantes :
une profondeur maximale entre 10 et 80 mm ;
une largeur maximale entre 8 et 100 mm, dans lequel le rapport de la profondeur maximale à la largeur maximale est compris entre 0,3 et 1,2 ;
la section inférieure incurvée (120, 330, 340) a un rayon entre 4 et 50 mm ;
l'au moins une section de paroi latérale (130, 350, 360) s'étend du côté supérieur (140) du moule (100, 200, 300) jusqu'à une profondeur entre 4 et 70 mm.

2. Moule (100, 200, 300) selon la revendication 1, pour la fabrication de tablettes de chocolat ou de barres de chocolat.

3. Moule (100, 200, 300) selon la revendication 1 ou la revendication 2, dans lequel la section inférieure incurvée (120, 330, 340) est de forme au moins partiellement cylindrique ou sphérique.

4. Moule (100, 200, 300) selon l'une des revendications 1 à 3, dans lequel les sections de paroi latérale (130, 150, 350, 360) sont inclinées d'au moins 5° DEG par rapport à une ligne verticale.

5. Moule (100, 200, 300) selon l'une quelconque des revendications précédentes, dans lequel la longueur de l'élément de cavité (110, 310, 320) est d'au moins 10 mm.

6. Moule (100, 200, 300) selon l'une quelconque des revendications précédentes, dans lequel le moule (300) comprend au moins deux éléments de cavité adjacents (310, 320), dans lequel au moins deux sections de paroi latérale adjacentes (350, 360) des deux éléments de cavité adjacents (310, 320) convergent à une profondeur entre 4 et 70 mm en formant une section médiane incurvée (370).

7. Moule (100, 200, 300) selon la revendication 6, dans lequel la section médiane incurvée (370) a un rayon entre 0,5 et 5 mm.

8. Moule (100, 200, 300) selon l'une quelconque des revendications précédentes, dans lequel le moule (100, 200, 300) comprend au moins une section d'encoche incurvée (210) pour fournir une ligne de cassure prédéterminée (430) pour un produit de chocolat moulé (400).

9. Moule (100, 200, 300) selon la revendication 8, dans lequel la section d'encoche incurvée (210) est fournie à une profondeur entre la profondeur des sections de paroi latérale (120, 350, 360) et la profondeur maximale de l'élément de cavité (310, 320), dans lequel de préférence la section d'encoche incurvée (210) se termine dans un intervalle entre au moins 1 mm au-dessus de la profondeur maximale de l'élément de cavité (310, 320) et/ou au moins 1 mm sous la section médiane incurvée (370) de deux éléments de cavité adjacents (310, 320).

10. Moule (100, 200, 300) selon l'une quelconque des revendications précédentes, dans lequel le moule (100, 200, 300) est fabriqué à partir d'une matière plastique élastique ou rigide.

11. Procédé de fabrication d'un produit de chocolat (400), ayant des inclusions particulaires visibles (440) constituées d'un matériau comestible non-chocolat, comprenant au moins les étapes suivantes :
la fourniture d'un moule (100, 200, 300) selon l'une quelconque des revendications 1 à 10 ;
la fourniture d'inclusions ;
la fourniture de chocolat chauffé ayant une viscosité entre 1000 et 15 000 mPa.s, la distribution des inclusions sur le moule (100, 200, 300) de telle sorte que les inclusions reposent au moins partiellement dans la section inférieure incurvée de l'au moins un élément de cavité (110, 310, 320) du moule (100, 200, 300) ;
le dépôt du chocolat chauffé dans le moule (100, 200, 300) de telle sorte que les inclusions agencées restent sensiblement en place ;
le refroidissement du chocolat chauffé jusqu'à ce que le chocolat se solidifie ;
le retrait du chocolat solidifié du moule (100, 200, 300).

12. Procédé de fabrication selon la revendication 11 où le produit de chocolat (400) est une tablette de chocolat ou une barre de chocolat.

13. Procédé selon la revendication 11 ou 12, où le chocolat chauffé a une viscosité entre 2500 et 12 000 mPa.s.

14. Procédé selon la revendication 13, où le chocolat chauffé a une viscosité entre 5000 et 10 000 mPa.s.

15. Procédé selon l'une quelconque des revendications 11 à 14, dans lequel après dépôt du chocolat chauffé, une étape de vibration est fournie facilitant une distribution homogène du chocolat chauffé dans le moule (100, 200, 300).

16. Procédé selon l'une quelconque des revendications 11 à 15, où les inclusions sont des fruits ou des morceaux de fruits ou des inclusions croustillantes ou des mélanges de ceux-ci.

17. Procédé selon les revendications 11 à 16, dans lequel les fruits ou morceaux de ceux-ci ont une taille moyenne entre 1 et 50 mm,

18. Procédé selon la revendication 17, dans lequel les fruits ou morceaux de ceux-ci ont une taille moyenne entre 2 et 40 mm.

19. Procédé selon la revendication 18, dans lequel les fruits ou morceaux de ceux-ci et ont une taille moyenne entre 5 et 25 mm.

20. Procédé selon l'une quelconque des revendications 16 à 19, dans lequel les inclusions distribuées dans le moule (100, 200, 300) sont des fruits durs, des fruits mous ou des mélanges de ceux-ci.

21. Procédé selon la revendication 20, dans lequel les inclusions de fruits durs (100, 200, 300) sont des noisettes, des amandes, des noix du Brésil, des noix de cajou ; et les inclusions de fruits mous (100, 200, 300) sont des raisins secs, des canneberges, des myrtilles.

22. Produit de chocolat (400), ayant des inclusions comestibles visibles (440) obtenu par un procédé selon l'une quelconque des revendications 11 à 21 où les inclusions visibles sont un fruit et constituent entre 25 et 70 % par rapport à une surface supérieure externe du produit de chocolat (400) opposée à un côté inférieur plat.

23. Produit de chocolat (400) selon la revendication 22, qui est une tablette de chocolat ou une barre de chocolat.

24. Produit de chocolat (400) selon l'une quelconque des revendications 22 à 23, qui comprend entre 30 et 60 % d'inclusions de fruits visibles (440) par rapport à la surface supérieure externe.

25. Produit de chocolat (400) selon la revendication 24, qui comprend entre 40 et 50 % d'inclusions de fruits visibles (440) par rapport à la surface supérieure externe.

26. Produit de chocolat (400) obtenu par un procédé selon l'une quelconque des revendications 11 à 21 ayant un côté inférieur plat et un côté profilé opposé au côté inférieur plat, dans lequel sur le côté profilé des inclusions sont intégrées dans un matériau de chocolat de telle sorte qu'elles sont visibles et le côté externe des inclusions suit le contour profilé du côté profilé, les inclusions étant des morceaux de matériau comestible non-chocolat, dans lequel le produit de chocolat a une hauteur h mesurée du fond plat jusqu'à la crête la plus élevée du côté profilé, dans lequel les inclusions sont uniquement incorporées dans une distance inférieure à 0,5 h, mais supérieure à 0,05 h, dans lequel les inclusions représentent au moins 25 % de la surface du côté profilé.

27. Produit de chocolat (400) selon la revendication 26 dans lequel les inclusions sont des fruits ou des morceaux de fruits ou des inclusions croustillantes ou des mélanges de ceux-ci.

28. Produit de chocolat (400) selon la revendication 26 ou 27 dans lequel les inclusions sont uniquement incorporées dans une distance inférieure à 0,3 h, mais supérieure à 0,1 h.

29. Produit de chocolat selon l'une quelconque des revendications 26 à 28, dans lequel les inclusions représentent moins de 95 % de la surface du côté profilé, le reste étant un matériau de chocolat.

30. Produit de chocolat selon l'une quelconque des revendications 26 à 29, dans lequel les inclusions représentent au moins 30 % de la surface du côté profilé.

31. Produit de chocolat selon l'une quelconque des revendications 26 à 30, dans lequel les inclusions représentent au moins 40 % de la surface du côté profilé.
